# FASCICULE DE BREVET EUROPEEN

(11) **EP 2 411 647 B1**
(45) Date de publication et mention de la délivrance du brevet: **14.10.2015**
(21) Numéro de dépôt: 10708338.8
(22) Date de dépôt: 12.02.2010
(51) Int. Cl.: F02D 41/00, F01N 3/08, F01N 3/023, F01N 13/02, F02D 21/08, F02D 23/02, F02D 41/38

(54) **PROCEDE DE CONTROLE DES EMISSIONS POLLUANTES D'UN MOTEUR A COMBUSTION, GROUPE MOTOPROPULSEUR ET VEHICULE EQUIPE DE CE GROUPE MOTOPROPULSEUR**
VERFAHREN ZUR ÜBERWACHUNG VON SCHADSTOFFEMISSIONEN AUS EINEM VERBRENNUNGSMOTOR, ANTRIEBSSTRANG UND MIT DEM ANTRIEBSSTRANG AUSGESTATTETES FAHRZEUG
METHOD FOR MONITORING POLLUTANT EMISSIONS FROM A COMBUSTION ENGINE, POWER TRAIN, AND VEHICLE FITTED WITH SAID POWER TRAIN

(30) Priorité: 24.03.2009 FR 0951853
(43) Date de publication de la demande: 01.02.2012
(73) Titulaire: Peugeot Citroën Automobiles Société Anonyme, 78140 Vélizy Villacoublay (FR)
(72) Inventeur: AUDOUIN, Arnaud, F-75018 Paris (FR); CHARIAL, Christophe, 78000 Versailles (FR); MAESSE, Pierre-Henri, F-92500 Rueil-Malmaison (FR)
(74) Mandataire: Ménès, Catherine
(86) Numéro de dépôt international: PCT/FR2010/050241
(87) Numéro de publication internationale: WO 2010/109100

(56) Documents cités:
- EP-A1- 1 321 643
- EP-A1- 1 837 496
- EP-A2- 0 806 553
- US-A1- 2008 202 101
- BRUENE H-J ET AL: "Diesel-Emissionstechniken von BMW fuer kuenftige weltweite Abgasnormen" MTZ MOTORTECHNISCHE ZEITSCHRIFT, VIEWEG VERLAG, WIESBADEN, DE, vol. 70, no. 3, 1 mars 2009 (2009-03-01), pages 210-216, XP001519594 ISSN: 0024-8525
- LAMPING M ET AL: "Zusammenhang zwischen Schadstoffreduktion und Verbrauch bei Pkw-Dieselmotoren mit Direkteinspritzung" MTZ MOTORTECHNISCHE ZEITSCHRIFT, VIEWEG VERLAG, WIESBADEN, DE, vol. 68, no. 1, 1 janvier 2007 (2007-01-01), pages 50-57, XP001519891 ISSN: 0024-8525

## Description

La présente invention concerne un procédé de contrôle des émissions polluantes d'un moteur à combustion.

L'utilisation de combustible fossile comme le pétrole ou le charbon dans un système de combustion, en particulier le carburant dans un moteur, entraine la production en quantité non négligeable de polluants qui peuvent être déchargés par l'échappement dans l'environnement et y causer des dégâts. Parmi ces polluants, les oxydes d'azote (appelés NOx) posent un problème particulier puisque ces gaz sont soupçonnés d'être un des facteurs qui contribuent à la formation des pluies acides et à la déforestation. En outre, les NOx sont liés à des problèmes de santé pour les humains et sont un élément clé de la formation de « smog » (nuage de pollution) dans les villes. La législation impose des niveaux de rigueur croissante pour leur réduction et/ou leur élimination de sources fixes ou mobiles.

Parmi les polluants que les législations tendent à réglementer de façon de plus en plus stricte figurent également les suies ou autres matériaux particulaires résultant essentiellement d'une combustion incomplète du carburant, plus particulièrement lorsque le moteur est opéré en mélange dit pauvre, c'est-à-dire avec un excédent d'oxygène (d'air) par rapport à la stoechiométrie de la réaction de combustion. Les mélanges pauvres sont de règle pour les moteurs dits diesel, dont l'allumage est obtenu par compression.

Pour ces deux grandes catégories de polluants, différents moyens de dépollution et stratégies de combustion sont mis en oeuvre.

Pour limiter les émissions de particules, la technologie des filtres à particules se généralise peu à peu pour tous les véhicules équipés d'un moteur diesel. Cette technologie consiste essentiellement à forcer le passage des gaz d'échappement à travers des canaux poreux d'une structure nid d'abeille en céramique. Les suies ainsi filtrées s'accumulent puis sont éliminées dans une opération de régénération du filtre pendant laquelle elles sont brûlées. Pour obtenir cette régénération, il est toutefois nécessaire d'augmenter la température des gaz d'échappement, ce qui est typiquement obtenu en enrichissant ceux-ci avec du carburant (injecté directement dans la ligne d'échappement ou dans la chambre de combustion du moteur, pendant la phase d'échappement du cycle de combustion) et/ou en augmentant la charge du moteur. Par ailleurs, un agent catalytique est utilisé pour faciliter la combustion des suies, cet agent étant soit déposé de façon permanente dans les canaux du filtre, soit introduit comme additif avec le carburant, cette dernière technologie permettant d'opérer avec des températures de combustion plus basses que celles requises avec des filtres catalysés.

Pour limiter les émissions de NOx, la principale voie mise en oeuvre sur les véhicules actuels a été celle de la réduction des émissions à la source, autrement dit, en opérant le moteur dans des conditions telles que les taux de NOx produits soient inférieurs aux taux limites. Ces conditions sont réunies notamment en pilotant de manière très fine les différents paramètres du moteur, à commencer par les paramètres d'injection de carburant et de réinjection à l'admission d'une partie des gaz d'échappement, ceci afin de réduire la concentration en oxygène favorable à la formation des oxydes d'azote.

Les niveaux d'émission tolérés tendant à se sévériser, une autre solution consiste à utiliser des solutions de post-traitement, en introduisant un agent réducteur dans la ligne d'échappement. Ainsi, une solution de post-traitement ayant fait la preuve de son efficacité est l'utilisation d'une source d'ammoniac (NH₃), telle que l'urée aqueuse. L'ammoniac réagit avec les NOₓ sur un catalyseur pour former de l'azote N₂ inerte et de l'eau H₂O. Cette solution est essentiellement connue sous le nom de son acronyme anglais SCR pour « Selective Catalytic Réduction ».

Pour traiter à la fois les NOx et les particules, la ligne d'échappement doit être pourvue des deux équipements de post-traitement, un catalyseur SCR (S) et un filtre à particules (F). Par ailleurs, ce dernier nécessite un catalyseur d'oxydation (C) placé en amont du filtre. Donc, d'amont en aval dans le sens des gaz d'échappement, on peut avoir quatre architectures types : SCF, CSF, CFS et CSF.

Dans la demande de brevet WO 2007/132102, on a montré les avantages d'une architecture de type CSF, associée à un superviseur modulant lors des phases de régénération du filtre à particules, les injections d'urée et de carburant pour compenser les pertes thermiques des gaz d'échappement dans le catalyseur, et ainsi, éviter que les gaz n'arrivent refroidis dans le filtre à particules.

Dans ce texte, il est simplement indiqué que le filtre à particules peut être d'un type connu en lui-même. Or, comme indiqué précédemment, il existe essentiellement deux grands types de filtre à particules, les filtres dits par abus de langage non-additivés (pour préciser que le carburant n'est pas additivé, les parois du filtre étant muni d'un revêtement catalytique) ou les filtres additivés. EP 1 321 643 A1 montre l'utilisation d'un filtre additives.

Les auteurs de la présente invention ont trouvé que l'utilisation d'un filtre additivé était tout spécialement avantageuse si elle est combinée avec une stratégie d'injection de carburant judicieusement choisie.

Plus précisément, l'invention a pour objet un procédé de contrôle des émissions de polluants par un moteur à combustion comportant au moins une chambre de combustion d'un mélange d'air et de carburant, ledit moteur étant associé à une ligne d'échappement comportant, dans le sens d'écoulement des gaz d'échappement, un catalyseur de réduction des NOx et un filtre à particules, caractérisé par l'utilisation d'un carburant comportant un additif favorisant la combustion des suies lors des régénérations du filtre à particules, et par l'opération du moteur selon au moins un mode de fonctionnement principal dans lequel le carburant est injecté conformément à une calibration minimisant les rejets de dioxyde de carbone par le moteur.

De façon bien connue, les calibrations d'un moteur thermique sont effectuées sur la base d'essais aux bancs d'essais pendant lesquels on mesure notamment les émissions de polluants que l'on doit contrôler, de façon à sélectionner les réglages qui pour un point de fonctionnement donné (correspondant essentiellement à un régime moteur donné et une demande de couple donnée) conduisent au meilleur compromis émissions de CO₂, émissions de polluants et brio (qui traduit notamment la capacité à répondre au plus vite à la demande du conducteur. Choisir une calibration minimisant les rejets de dioxyde de carbone revient donc à renforcer les exigences du côté consommation de carburant, et à réduire celles au niveau des émissions des NOx, sans plus d'autres difficultés au niveau de la sélection de la calibration.

Le catalyseur de réduction des NOx est de préférence un catalyseur de type SCR, des moyens pour injecter un agent réducteur, tel par exemple une solution aqueuse d'urée étant prévus en amont de ce catalyseur. Dans une variante, ce catalyseur peut également être constitué par un piège à NOx dit à mélange pauvre, également connu sous son acronyme anglo-saxon LNT (Lean NOx Trap), c'est-à-dire un dispositif capable d'adsorber les NOx contenus dans les gaz d'échappement lorsqu'on opère le moteur en mélange pauvre, et de réduire et libérer ces NOx quand le moteur est temporairement opéré en mélange riche pour régénérer le piège. Ce type de dispositif comporte outre un agent catalyseur de réduction, à base de métaux précieux tels que du platine ou du rhodium, un agent adsorbant, typiquement un composé d'un métal alcalin à l'exemple du BaCO3.

Dans la mesure où l'architecture de la ligne d'échappement est compatible avec un fonctionnement du moteur dans un mode privilégiant la réduction du dioxyde de carbone au prix d'une production de NOx, il devient possible d'envisager différentes simplifications du moteur et des stratégies de pilotage qui lui sont associées.

Ainsi, il est proposé de ne plus refroidir les gaz d'échappement recirculés pour être réadmis à l'admission ce qui bien sûr au niveau du groupe motopropulseur va se traduire par l'absence de moyens pour refroidir ces gaz, avec donc l'économie d'un échangeur thermique et éventuellement du by-pass de cet échangeur et de la vanne associée à ce by-pass

Comme indiqué précédemment, l'utilisation des gaz EGR a été la voie principale utilisée par l'industrie automobile pour diminuer la température dans la chambre de combustion et delà, réduire la quantité d'oxydes d'azote produits. Cette diminution de la température est bien sûr d'autant plus efficace que les gaz sont refroidis avant d'être mélangés aux gaz frais. Pour autant, ce refroidissement impose de disposer d'un échangeur (dit échangeur EGR) et de moyens pour bipasser cet échangeur. Ces équipements supplémentaires alourdissent le véhicule et donc, augmentent sa consommation de carburant.

Il est par ailleurs proposé en mode nominal, d'injecter le carburant au plus en trois temps d'injection, l'injection principale étant précédée d'au plus deux injections pilotes, hors du mode de fonctionnement régénération, autrement dit de ne pas procéder à des injections principales multiples (ou split-injection) complexes. Par mode nominal il est entendu hors du mode de fonctionnement dédié à la régénération du filtre à particules. Ceci permet un gain de consommation et de plus, réduits le coût des injecteurs.

Enfin, selon l'invention, il est également proposé d'opérer sans recaler la boucle d'air et les débits d'injection sur la base de la mesure de la quantité d'oxygène dans les gaz d'échappement - ce qui permet d'économiser une sonde à oxygène

La présente invention a également pour objet un groupe motopropulseur comportant un moteur à combustion par compression alimenté en carburant par des moyens d'injection d'un carburant comportant un additif favorisant la combustion des suies lors des régénérations du filtre à particules, comportant des moyens pour recycler une partie des gaz d'échappement à l'admission du moteur, et une ligne d'échappement comportant un catalyseur d'oxydation et, dans le sens de circulation des gaz d'échappement, un catalyseur de réduction des oxydes d'azote et un piège à particules, caractérisé en ce qu'il comporte des moyens de contrôle moteur aptes à la mise en oeuvre d'une stratégie minimisant la production de dioxyde de carbone par le moteur.

Le catalyseur d'oxydation est disposé en amont du catalyseur de réductions des oxydes d'azote.

Dans une variante, le groupe motopropulseur comporte de plus une turbine d'un turbocompresseur placée dans la ligne d'échappement, en amont des moyens de dépollution des gaz, les moyens pour recycler une partie des gaz d'échappement à l'admission comportant une dérivation des gaz en amont de ladite turbine

Les moyens d'alimentation en carburant ne permettent pas d'injecter le carburant en plus de 4 injections par cycle du piston, dont 3 seulement lorsque le moteur est opéré en mode nominal c'est-à-dire hors des phases de régénération du filtre à particules. Ceci permet d'utiliser des injecteurs moins onéreux, car non seulement le nombre maximal d'injections possible est réduit (pour des moteurs modernes, les injecteurs sont normalement conçus pour permettre de 5 à 7 injections par cycle, et ce d'autant plus qu'en mode nominal, on n'opère pas plus de 3 injections et le coût d'un injecteur dépend non seulement de sa capacité à procéder à des injections haute pression (et donc à multiplier les injections par cycle) mais également du nombre total d'injection qui seront pratiquées sur toute la durée de vie de l'injecteur.

Le catalyseur réducteur des NOx du groupe motopropulseur est par exemple un piège à NOx à mélange pauvre (LNT) ou un catalyseur de type SCR associé à des moyens d'injection d'un agent réducteur, disposés entre la catalyseur d'oxydation et le catalyseur SCR

L'invention a également pour objet un véhicule équipé du groupe motopropulseur défini précédemment.

D'autres détails et caractéristiques avantageuses de l'invention ressortent de la description détaillée faite ci-après en référence aux figures annexées qui montrent :
- Figure 1 : une vue schématique d'un moteur et de sa ligne de traitement des gaz d'échappement ;
- Figure 2 : un schéma montrant de manière adimensionnée les relations entre la production de CO₂ et celle de NOx, en sortie d'un moteur diesel ;
- Figure 3 : un graphe comparatif montrant l'évolution des émissions de particules en fonction de la quantité de NOx produites, selon que les gaz recirculés sont refroidis à la température ambiante, partiellement refroidis ou non refroidis.
- Figure 4 : un graphe comparatif montrant l'évolution des émissions de particules en fonction de la quantité de NOx produites, avec une injection multiple ou non.

On précise pour la suite de la description que, sauf indication contraire, dans les fourchettes de valeurs qui sont données, les valeurs aux bornes sont incluses.

Par oxydes d'azote NOx on entend notamment le monoxyde NO et le dioxyde NO₂, avec éventuellement une présence d'oxydes du type protoxyde N₂O, sesquioxyde N₂O3, pentoxyde N₂O₅.

Dans le contexte des normes applicables pour les moteurs diesel commercialisés en Europe, les niveaux d'émissions de polluants tolérés sont les suivants :

| Norme | *CO* | *NOx* | *HC + NOx* |
|---|---|---|---|
| EURO4 mg/km | 500 | 250 | 300 |
| EURO5 mg/km | 500 | 180 | 230 |
| EURO6 mg/km | 500 | 80 | 170 |

Donc selon la norme Euro6, applicable en 2014, les niveaux tolérés pour les émissions d'oxydes seront notamment divisées par 2,25 par rapport à leur niveau Euro5, applicable fin 2009.

En pratique, les constructeurs ont démontré que les normes Euro5, en ce qu'elles concernent les oxydes d'azote, peuvent être satisfaites pour les moteurs de petites ou moyennes cylindrées par une réduction des émissions à la source par optimisation de la géométrie de la chambre de combustion l'intégration de divers composants sur le moteur, comme par exemple un EGR basse pression et une calibration très fine du moteur.

Pour des moteurs plus puissants, ou pour satisfaire des normes encore plus sévères, on prévoit des moyens de post-traitement spécifiques comme un catalyseur de SCR (ou « Selective Catalytic Reduction ») qui permet de réduire les NOx par l'ajout d'un réducteur. Le réducteur classiquement utilisé est l'ammoniac (NH₃), obtenu par thermolyse/ hydrolyse de l'urée dans ligne d'échappement selon les réactions suivantes :

(NH₂)2CO → HNCO + NH₃ : thermolyseà 120°C

HNCO + H2O → CO₂ + NH₃ : hydrolyse à 180°C

Le catalyseur SCR sert à favoriser la réduction des NOx par NH₃ selon les 3 réactions suivantes:

4NH₃ + 4NO + O₂ → 4N₂ + 6H₂O

2NH₃ + NO + NO₂ → 2N₂ + 3H₂O

8NH₃ + 6NO₂ → 7N₂ + 12H₂O

Toutefois le catalyseur SCR n'est efficace que sur une plage de températures comprises entre environ 180°C et 500°C, ce qui exclut certaines conditions de fonctionnement des moteurs et donc limite l'efficacité de conversion qui peut être atteinte par le principe de la SCR.

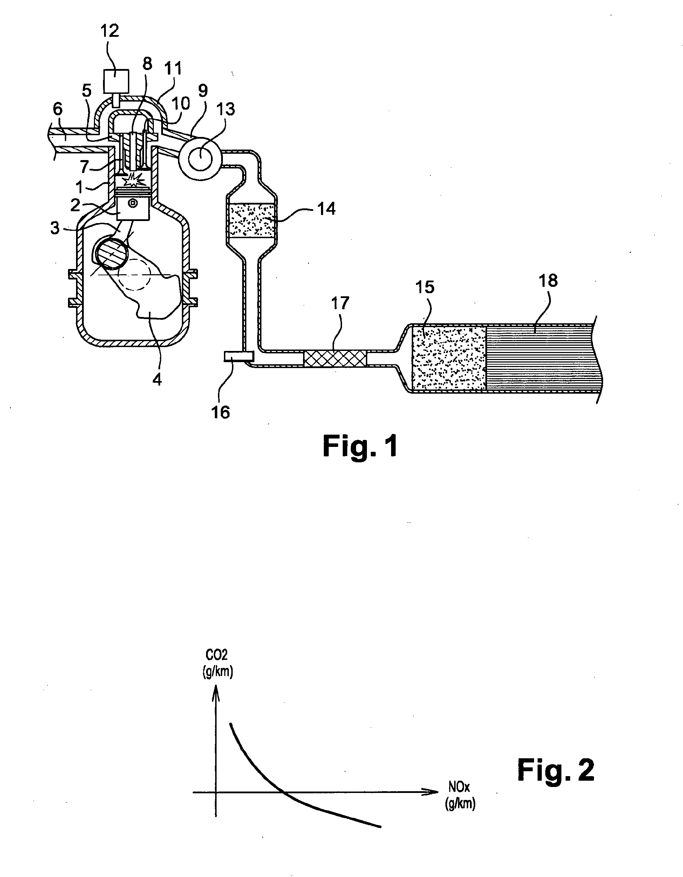

La figure 1 est un schéma de principe d'un moteur thermique tel qu'un moteur diesel selon l'invention. Le moteur comprend au moins un piston 1, qui se déplace en translation dans un cylindre 2, et dont le mouvement alternatif en translation est transmis par une bielle 3 à un vilebrequin 4

Le cylindre 2 délimite avec le piston 1 et une culasse 5 une chambre de combustion dans laquelle de l'air frais est amené via une conduite 6, et admis dans la chambre suivant la position d'une soupape d'admission 7. Du carburant, par exemple du gazole ou un biocarburant tel un diester est introduit dans la chambre de combustion par un injecteur 8. Le mélange est comprimé à une pression suffisamment élevée pour permettre l'auto-inflammation du mélange air-carburant et les gaz de combustion sont évacués par un conduit d'échappement 9, dont l'ouverture est commandée par une soupape d'échappement 10 qui débouche dans un collecteur d'échappement. De ce collecteur, il est prévu une conduite 11 pour la recirculation d'une partie des gaz d'échappement, une vanne dit vanne EGR 12 permettant de contrôler le débit de gaz d'échappement réintroduit à l'admission.

La ligne d'échappement ici illustrée comporte, dans le sens de circulation des gaz, par exemple une turbine 13, entrainée par les gaz d'échappement et dont l'arbre entraine par exemple un compresseur placé dans la ligne d'admission des gaz frais (ici non représenté). Les gaz d'échappement passent ensuite dans un catalyseur d'oxydation 14 dont le rôle premier est d'oxyder en dioxyde de carbone le monoxyde de carbone contenu dans les gaz en sortie de moteur.

En aval du catalyseur d'oxydation 14, les gaz d'échappement traversent un catalyseur de traitement des NOx 15. Dans le cas de la figure 1, ce catalyseur est un catalyseur SCR, ce qui suppose que des moyens d'injections d'un agent réducteur tel que de l'urée (injecteur 16). Selon les cas, on peut également prévoir un découpleur mécanique 17 entre l'injecteur 16 et le catalyseur SCR 15. En aval de ce catalyseur 11 est disposé un piège à particules 18 de préférence accolé au catalyseur 15.

Lorsque comme illustré à la figure 1, le catalyseur deNOx est disposé en amont du filtre à particules dans la ligne d'échappement, les températures nécessaires à son activation peuvent être assez facilement atteintes et alors ce catalyseur peut être capable de traiter très efficacement des quantités de NOx sans commune mesure avec les quantités de NOx conventionnelles.

Or, depuis de nombreuses années, les motoristes ont développé des stratégies d'injection du carburant visant à minimiser la production des NOx. Comme illustré à la figure 2, en pointillés, ces stratégies consistent notamment à opérer une injection en deux temps ou trois temps, avec une ou deux injections pilote précédant le point mort haut et une injection principale postérieure à ce point mort haut.

Si maintenant, conformément à l'invention, on renverse les priorités en considérant que la disposition du catalyseur SCR en amont du filtre à particules lui permet d'être exceptionnellement efficace, de très substantiels gains en économie de carburant sont permis. Ce gain est obtenu toutefois au prix d'une très forte augmentation des NOx, de l'ordre de 200 à 250% voire plus, détérioration qui apparaît donc comme totalement rédhibitoire selon les pratiques de l'art. Le graphe de la figure 2 montre en effet que les gains en CO₂ entraînent une dégradation des NOx et inversement.

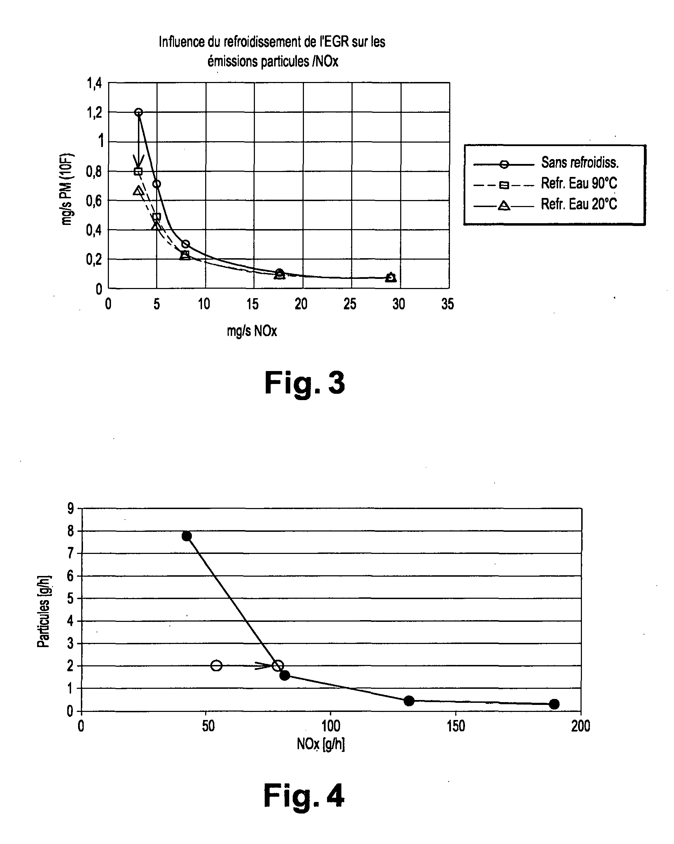

Le premier de ces gains est lié à la suppression de l'échangeur EGR et est illustré à l'aide de la figure 3 qui représente la relation entre les NOx produits par un moteur et la quantité de particules produites, en fonction de la qualité du refroidissement des gaz.

On constate que le fait de refroidir les gaz recirculés permet, à taux d'oxyde d'azote constants, de diminuer les particules.

Pour rappel, l'EGR circule dans l'échangeur uniquement lorsque le moteur est chaud, ce qui correspond approximativement à une période où le système SCR est pleinement actif. On peut donc prendre un réglage moteur qui à iso émissions de particules par rapport au réglage initial émet sensiblement plus de NOx. (Exemple : si le point A est le réglage de base, le moteur émet environ 7,5mg/s de NOx pour 0,2 mg/s de Part. Si maintenant on décale le réglage du moteur pour émettre 10,5mg/s de NOx, le taux de particules n'est plus dépendant du refroidissement ou non des gaz recirculés.

Or, il va de soi que la suppression de l'échangeur EGR permet de s'affranchir de son poids. De plus, dans ces conditions, il n'est bien sûr plus nécessaire de prévoir un by-pass de cet échangeur pour certains points de fonctionnement moteur, d'où un allégement supplémentaire. Limiter à une simple vanne de régulation, le module EGR voit ainsi son coût divisé par deux par rapport à un module complet, associant à la vanne un échangeur et un by-pass.

Qui plus est, le fait de réintroduire des gaz plus chauds dans la chambre de combustion a tendance à diminuer le bruit de combustion.

Par ailleurs, l'intégration sous capot d'un échangeur et d'un by-pass n'est pas aisée, donc le fait de les supprimer peut permettre de libérer de la place pour d'autres systèmes - en particulier des systèmes de type stop-and-start et des moyens de stockage de l'électricité associés - ou pour améliorer les problématiques de choc avec des piétons.

Un autre point très important est celui de la simplification des systèmes d'injection du carburant. En effet, pour limiter les émissions de NOx et de particules, il faut un système d'injection performant permettant un nombre élevé d'injections par cycle - et donc avec des temps de réponse très rapides. Typiquement, sur des systèmes performants, il y a 4 injections par cycle : 2 pilotes, et une injection principale splittée en 2 en mode nominal, ce nombre pouvant monter à 5 ou 6 en mode régénération.

Ces multiples injections n'ont de sens que si le système d'injection est capable de doser les quantités injectées d'une manière juste (ou du moins aussi juste que possible), avec des intervalles très courts entre les injections. Ces impératifs ont conduits au développement d'injecteurs très performants tels que des injecteurs piézoélectriques et à des conceptions spécifiques des conduites d'alimentation en carburant afin de limiter les effets d'ondes de pression même si le carburant à très haute pression.

La figure 4 illustre l'allure du compromis entre le taux d'émission de particules et celui des NOx, sachant que les normes environnementales plafonnent les deux niveaux. Clairement, tout gain en NOx est très pénalisant pour les émissions de particules dès lors que les émissions de NOx sont plafonnées à environ 75g/h. Le point M montre qu'en procédant à des injections multiples, il est néanmoins possible de ramener le taux d'émission des NOx à environ 55 g/h à iso-rejets de particules.

Maintenant, si conformément à l'invention on admet une surémission de NOx en sortie du moteur (cette surémission étant traitée dans la ligne d'échappement via le système de post-traitement), les injections multiples ne sont plus nécessaires.

Comme procéder par injections multiples est pénalisant en termes de consommation de carburant (les injections étant nécessairement étalées dans le temps, et donc non effectuées exactement au moment où le rendement énergétique du moteur peut être optimal), supprimer ces injections multiples entraine un gain immédiat en consommation. Par ailleurs, cette suppression permet l'emploi de systèmes d'injection plus simples, par exemple des injecteurs basés sur la technologie des solénoïdes.

Cette suppression permet également de simplifier l'architecture du rail commun des injecteurs, en particulier la nécessité de prévoir des trous calibrés (ou gicleurs) dans les rails calibrés, mis en place pour limiter les ondes de pression dans le rail commun des injecteurs, En limitant le nombre d'injection par temps de cycle, on peut en effet diminuer la pression d'injection et donc la nécessité de compenser les effets d'une trop grande pression. Cette figure 4 permet également de comprendre un autre point clef de l'invention : dans la zone des faibles émissions de NOx, autour du point M, toute dérive du système peut entrainer une très forte augmentation de la quantité de particules émises.

Or, si la quantité de particules est trop importante, la régénération du filtre peut générer des températures très élevées qui fragilisent le filtre, et donc à terme, les émissions de particules. C'est pourquoi une sonde à oxygène est normalement placée dans la ligne d'échappement pour minimiser ce risque de surémission des particules afin de recaler la boucle d'air est les débits d'injection qui risquent de dériver avec le temps, notamment du fait de l'encrassement du circuit EGR ou de celui du circuit d'injection.

Si maintenant conformément à l'invention on s'autorise des taux d'émission de NOx très élevés, par exemple dans la zone cerclée autour de 135 g/h, on observe que le taux de particules est faible et essentiellement stable. Dans ces conditions, recaler l'injection à partir de l'information de la sonde oxygène n'est plus nécessaire.

Ainsi, en modifiant la problématique de base et en choisissant d'implanter un système de traitement des NOx très performant, on peut reconfigurer une grande partie du moteur et utiliser des éléments moins onéreux pour les systèmes EGR, l'injection de carburant et la ligne d'échappement, de sorte que d'une part, ces éléments à moindre coût compensent en grande partie le surcoût associé à l'implantation du système de post-traitement des NOx, minimisent certains coûts de maintenance du véhicule.

Ces gains d'équipement s'accompagnent de plus d'une réduction très sensible de la consommation de sorte que le véhicule dans son ensemble pollue moins qu'un véhicule doté à priori d'une série d'équipements plus sophistiqués.

## Revendications

1. Procédé de contrôle des émissions de polluants par un moteur à combustion comportant une chambre de combustion d'un mélange d'air et de carburant, ledit moteur étant associé à une ligne d'échappement (9) comportant, dans le sens d'écoulement des gaz d'échappement, un catalyseur de réduction des NOₓ (15) et un filtre à particules (18), **caractérisé par** l'utilisation d'un carburant comportant un additif favorisant la combustion des suies lors des régénérations du filtre à particules (18), et par l'opération du moteur selon au moins un mode de fonctionnement principal dans lequel - le carburant est injecté conformément à une calibration minimisant les rejets de dioxyde de carbone par le moteur par injection de carburant dans les chambres de combustion du moteur en au plus trois temps d'injection par cycle en mode nominal hors régénération, - en réinjectant une partie des gaz d'échappement à l'admission, non refroidis.

2. Procédé selon la revendication précédente, **caractérisé en ce que** ledit mode de fonctionnement minimisant les rejets de dioxyde de carbone est obtenu sur la base d'une calibration n'utilisant pas comme paramètre d'entrée la quantité d'oxygène dans les gaz d'échappement.

3. Groupe motopropulseur comportant un moteur à combustion par compression alimenté en carburant par des moyens d'injection (8) d'un carburant comportant un additif favorisant la combustion des suies lors des régénérations du filtre à particules, comportant des moyens pour recycler sans refroidissement une partie des gaz d'échappement à l'admission du moteur, et une ligne d'échappement (9) comportant un catalyseur d'oxydation (14) et, dans le sens de circulation des gaz d'échappement, un catalyseur de réduction des oxydes d'azote (15) et un piège à particules (18), **caractérisé par** des moyens de contrôle moteur adaptés à la mise en oeuvre du procédé de la revendication 1 minimisant la production de dioxyde de carbone par le moteur, le catalyseur d'oxydation (14) étant disposé en amont du catalyseur de réduction des oxydes d'azote (15).

4. Groupe motopropulseur selon la revendication précédente, **caractérisé en ce qu'**une turbine (13) d'un turbocompresseur est de plus placée dans la ligne d'échappement (9), en amont des moyens de dépollution des gaz et **en ce que** les moyens pour recycler une partie des gaz d'échappement à l'admission comportent une dérivation des gaz en amont de ladite turbine.

5. Groupe motopropulseur l'une quelconque des revendications 3 ou 4, **caractérisé en ce que** les moyens d'alimentation en carburant sont conçus pour permettre au plus 4 injections par cycle lors des phases de régénération du filtre à particules (18), et au plus 3 injections par cycle du piston (2) en mode nominal.

6. Groupe motopropulseur selon la revendication précédente, **caractérisé en ce que** les moyens d'alimentation en carburant sont conçus pour permettre au plus 3 injections par cycle du piston (2) en mode nominal, avec une injection principale précédée d'au plus deux injections pilotes.

7. Groupe motopropulseur selon l'une quelconque des revendications 3 à 6, **caractérisé en ce que** le catalyseur réducteur des NOₓ (15) est un piège à NOₓ à mélange pauvre (LNT) ou un catalyseur de type SCR associé à des moyens d'injection d'un agent réducteur, disposés entre le catalyseur d'oxydation et le catalyseur SCR.

8. Véhicule comportant un groupe motopropulseur selon l'une quelconque des revendications 3 à 7.

## Patentansprüche

1. Verfahren zur Kontrolle der Abgasemissionen durch einen Verbrennungsmotor umfassend eine Brennkammer eines Luft-Kraftstoff-Gemischs, wobei der Motor mit einer Abgaslinie (9) umfassend in Strömungsrichtung der Abgase einen NOx-Reduktionskatalysator (15) und einen Partikelfilter (18) verbunden ist, **gekennzeichnet durch** die Verwendung eines Kraftstoffs umfassend ein Additiv, das die Verbrennung der Ruße bei den Regenerierungen des Partikelfilters (18) fördert, und **durch** den Betrieb des Motors nach mindestens einer Hauptbetriebsart, bei der der Kraftstoff gemäß einer Kalibrierung eingespritzt wird, die den Kohlendioxidausstoß **durch** den Motor **durch** die Einspritzung von Kraftstoff in die Brennkammern des Motors in drei Einspritzzeiten pro Takt im normalen Betrieb ohne Regenerierung und Rückführung eines Teils der Abgase in das Ansaugsystem ohne Abkühlung minimiert.

2. Verfahren nach dem vorherigen Anspruch, **dadurch gekennzeichnet, dass** diese Betriebsart, die den Kohlendioxidausstoß minimiert, auf Grundlage einer Kalibrierung erhalten wird, die als Ausgangsparameter nicht die Sauerstoffmenge in den Abgasen verwendet.

3. Antriebsaggregat umfassend einen Verbrennungsmotor durch Verdichtung, mit Kraftstoff versorgt durch Einspritzmittel (8) eines Kraftstoffs, umfassend ein Additiv, das die Verbrennung der Ruße bei der Regenerierung des Partikelfilters fördert, umfassend die Mittel zur Rückführung ohne Kühlung eines Teils der Abgase in das Ansaugsystem des Motors, und eine Abgaslinie (9) umfassend einen Oxidationskatalysator (14) und in der Strömungsrichtung der Abgase einen Stickoxid-Reduktionskatalysator (15) und einen Partikelfilter (18), **gekennzeichnet durch** Motorsteuerungsmittel angepasst zur Umsetzung des Verfahrens des Anspruchs 1, die die Erzeugung von Kohlendioxid durch den Motor minimieren, wobei der Oxidationskatalysator (14) vor dem Stickoxid-Reduktionskatalysator (15) angeordnet ist.

4. Antriebsaggregat nach dem vorherigen Anspruch, **dadurch gekennzeichnet, dass** außerdem eine Turbine (13) eines Turboladers in der Abgaslinie (9), vor den Gasreinigungsmittel angeordnet ist, und dass die Mittel zur Rückführung eines Teils der Abgase in das Ansaugsystem eine Gasabzweigung vor dieser Turbine umfassen.

5. Antriebsaggregat nach einem der Ansprüche 3 oder 4, **dadurch gekennzeichnet, dass** die Kraftstoffeinspritzmittel konzipiert sind, um mindestens 4 Einspritzungen pro Takt bei den Regenerierungsphasen des Partikelfilters (18) und mindestens 3 Einspritzungen pro Takt des Kolbens (2) im normalen Betrieb ermöglichen.

6. Antriebsaggregat nach dem vorherigen Anspruch, **dadurch gekennzeichnet, dass** die Kraftstoffeinspritzmittel konzipiert sind, um mindestens 3 Einspritzungen pro Takt des Kolbens (2) im normalen Betrieb mit einer Haupteinspritzung nach zwei weiteren Piloteinspritzungen ermöglichen.

7. Antriebsaggregat nach einem der Ansprüche 3 bis 6, **dadurch gekennzeichnet, dass** der NOx-Reduktionskatalysator (15) ein Mager-NOx-Filter (LNT) oder ein Katalysator vom Typ SCR verbunden mit Einspritzmitteln eines Reduziermittels angeordnet zwischen dem Oxidationskatalysator und dem SCR-Katalysator ist.

8. Fahrzeug umfassend ein Antriebsaggregat nach einem der Ansprüche 3 bis 7.

## Claims

1. Method for controlling emissions of pollutants by a combustion engine comprising a chamber for combustion of a mixture of air and fuel, said engine being associated with an exhaust line (9) comprising, in the direction of flow of the exhaust gases, a catalyst (15) for reducing the NOₓ and a particle filter (18), **characterised by** the use of a fuel comprising an additive promoting the combustion of the soot during regenerations of the particle filter (18), and by the operation of the engine according to at least one main operating mode in which the fuel is injected in accordance with a calibration minimising the discharges of carbon dioxide by the engine by injecting fuel into the combustion chambers of the engine, and at most three injection times per cycle in nominal mode outside regeneration, reinjecting some of the non-cooled exhaust gases at the inlet.

2. Method according to the preceding claim, **characterised in that** said operating mode minimising the discharges of carbon dioxide is obtained on the basis of a calibration not using the quantity of oxygen in the exhaust gases as an input parameter.

3. Power unit comprising a compression combustion engine supplied with fuel by means (8) for injecting a fuel comprising an additive assisting the combustion of soot during regenerations of the particle filter, comprising means for recycling without cooling some of the exhaust gases to the inlet of the engine, and an exhaust line (9) comprising an oxidation catalyst (14) and, in the direction of flow of the exhaust gases, a catalyst (15) for reducing the nitrogen oxides and a particle trap (18), **characterised by** engine control means suitable for implementing the method of claim 1 minimising the production of carbon dioxide by the engine, the oxidation catalyst (14) being disposed upstream of the catalyst (15) for reducing the nitrogen oxides.

4. Power unit according to the preceding claim, **characterised in that** a turbine (13) of a turbocompressor is also placed in the exhaust line (9) upstream of the gas depollution means and **in that** the means for recycling some of the exhaust gases to the inlet comprise a diversion of the gases upstream of said turbine.

5. Power unit according to either one of claims 3 or 4, **characterised in that** the fuel supply means are designed to allow no more than four injections per cycle during phases of regenerating the particle filter (18), and no more than three injections per cycle of the piston (2) in nominal mode.

6. Power unit according to the preceding claim, **characterised in that** the fuel supply means are designed to allow no more than three injections per cycle of the piston (2) in nominal mode, with a main injection preceded by no more than two pilot injections.

7. Power unit according to any one of claims 3 to 6, **characterised in that** the catalyst (15) for reducing the NOₓ is a lean-mixture NOₓ trap (LNT) or a catalyst of the SCR type associated with means for injecting a reducing agent, disposed between the oxidation catalyst and the SCR catalyst.

8. Vehicle comprising a power unit according to any one of claims 3 to 7.
